# EUROPEAN PATENT APPLICATION

(11) **EP 1 227 496 A1**
(43) Date of publication of application: **31.07.2002**
(21) Application number: 01300399.1
(22) Date of filing: 17.01.2001
(51) Int. Cl.: G11C 11/34, G11B 9/08, G11B 5/00

(54) **Non-volatile memory**

(71) Applicant: CAVENDISH KINETICS LIMITED, Nr Royston, Hertfordshire SG8 8PZ (GB)
(72) Inventor: Smith, Charles, Cambridge CB3 0HE (GB)
(74) Representative: Haley, Stephen

(57) **Abstract**

The present invention seeks to provide a non-volatile memory device which has an increased density of storage elements formed thereon.

A non-volatile memory device comprises a substrate (2) supporting an array of field efect transistor devices. A plate is movable with respect to the substrate supporting an array of insulated charge storing elements (6) each having gate-forming metal plates (7) adjacent thereto. There is also means (12) for moving the plate with respect to the substrate such that, in use, the plate can be moved to position different charge storing elements over one of the array of field effect transistors so that each field effect transistor is able to determine the charge stored on more than one element. A corresponding magnetic effect device is also provided.

## Description

This invention relates to a non-volatile memory.

Non-volatile memories are well known in the art. The preferred manner of operation of such devices is to provide a region which is insulated and on which charge can be stored. A semiconductor device is then placed adjacent to the insulated region to detect the amount of charge stored thereon. An individual element is such a device generally has a conducting plate, often called a gate formed on the insulating region surrounding the charge storing region, with a semiconductor field effect transit placed on the side of the charge storing region opposite to the gate. The semiconductor field effect transistor is used to determine the amount of charge stored in the charge storage region. At a particular threshold voltage the semiconductor field effect transistor conducts current and the threshold voltage changes if charge is stored between the gate and the transistor. Charge is stored in the charge storage region by providing conducting islands or providing a layer of insulator with a small band cap.

Of course, known non-volatile memory devices have many arrays of individual elements, meaning that each element has to have placed around it column and row address electrodes for selection of particular elements within an array when reading of the element is required. Because of this, each individual element has a foot print which is comparatively large with respect to the region on which charge is stored. This large foot print is a severe restriction on the overall minimum size of a non-volatile memory device, as there is a minimum manufacturing size for each of the components of an individual element. This makes it difficult to increase the storage capacity of non-volatile memories without also increasing their overall physical dimensions.

The present invention seeks to provide a non-volatile memory device which has an increased density of storage elements formed thereon.

According to the present invention there is provided a non-volatile memory device comprising:
a substrate supporting an array of field effect transistor devices;
a plate movable with respect to the substrate supporting an array of insulated charge storing elements each having gate-forming metal plates adjacent thereto; and
means for moving the plate with respect to the substrate such that, in use, the plate can be moved to position different charge storing elements over one of the array of field effect transistors so that each field effect transistor is able to determine the charge stored on more than one element.

By providing a plate of charge storing elements that can be moved with respect to the field effect transistors, it is possible to pack the charge storing elements far more closely than in prior art devices. This increases the overall storage density of the device. The substrate may be appropriately doped silicon.

The plate may be attached to the substrate by anchor points and at least one flexible member associated with each anchor point. The flexible members may be formed from metal and may act as conducting connecting regions for the gates on the plate.

The means for moving the plate may comprise of one or more ribbed conducting elements attached to the plate in combination with one or more ribbed elements fixed to the substrate, such that a charge applied to one of the elements shifts it with respect to the other.

The field effect transistors may have sources which are shaped so as to enable them to be driven to charge individual charge storing elements.

According to the present invention there is also provided a non-volatile memory device comprising:
a substrate supporting an array of magnetic field detecting devices;
a plate movable with respect to the substrate supporting an array of elements formed from a magnetisable material, each having a magnetising device associated therewith; and
means for moving the plate with respect to the substrate such that, in use, the plate can be moved to position different magnetisable elements over one of the array of magnetic field detecting devices so that each magnetic field detecting device is able to determine the magnetisation of more than one magnetisable element.

With such a device the same benefits in terms of increased density of data storing elements are provided as with the first aspect of the invention. Furthermore, with the configuration of the present invention it is possible to build in redundancy so that manufacturing yields can be increased. In other words, if several read cells are not working due to errors in manufacture, then data can still be stored and read by using an adjacent read cell. Accordingly, with the invention, even if there were only a 50% yield in production of cells, the entire area of the device could still be used to store data.

The magnetic field detecting devices may be Hall effect devices or a magnetic multilayer, the resistance of which is very sensitive to magnetic fields. Again, the plate may be attached to the substrate by anchor points and at least one flexible member associated with each anchor point. In this case the flexible members may also be formed from metal and may act as conducting connecting regions for the magnetising devices on the plate.

One example of the present invention will now be described with reference to the accompanying drawings, in which:
Figure 1 is a schematic side view of a prior art non-volatile memory element;
Figure 2 is a schematic plan view of the element of figure 1;
Figure 3 is a schematic side view of a first example of the present invention;
Figure 4 is a plan view of a memory device having memory elements of the type shown in figure 3;
Figure 5 is a side schematic view of a device of figure 4;
Figure 6 is a plan view of active device area of the device of figures 4 and 5;
Figure 7 is a plan view of the footprint of the device of figures 4 and 5;
Figures 8A to 8C are schematic side views of further examples of elements according to the invention;
Figures 9 to 11 are schematic views showing manufacturing steps performed during construction of a device according to the invention; and
Figures 12A and 12B are schematic views of a magnetic storage device according to the invention.

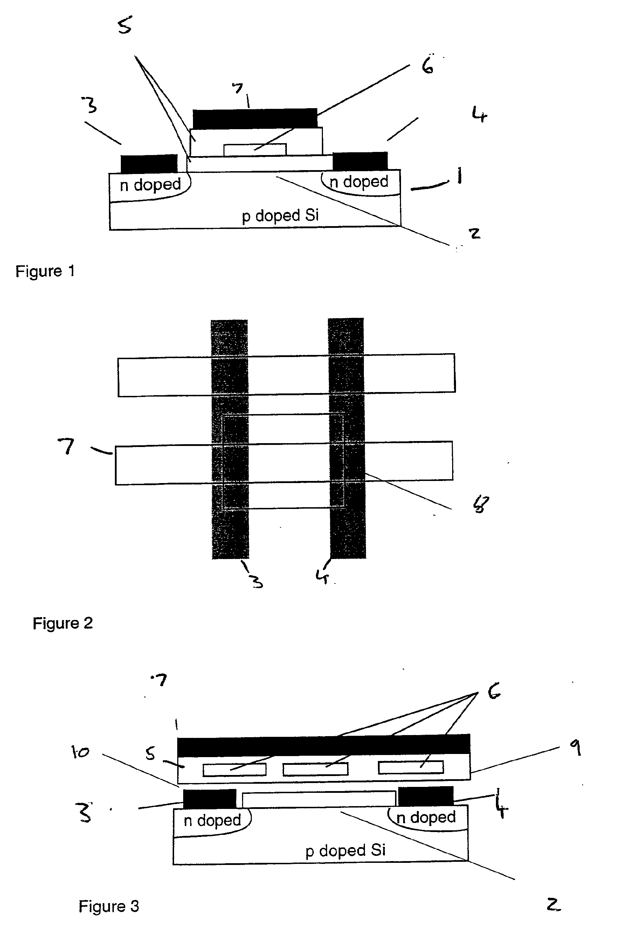

Figure 1 shows a prior art memory element 1 of the type described above. As can be seen, a field effect device is formed on an appropriately doped silicon substrate 2 and is provided with a source 3 and a drain 4. Also formed on the surface of the substrate 2 are insulating layers 5 which surround a charge storing element 6. A gate 7 is formed from a conductor, such as a metal, on top of the insulators 5. Figure 2 shows a plan view of the element of figure 1, with reference numeral 8 denoting the footprint of a single element. As discussed above, the field effect transistor formed on the substrate 2 has a threshold voltage that is dependent upon the amount of charge stored in the element 6, and the threshold voltage can therefore be used to determine whether or not the amount of charge stored on the element 6 represents a O or a 1, and hence the bit of data stored on the element. As is also discussed above, the memory element 1 has a large footprint, mainly because of the size of the components of the field effect transistor.

Figure 3 shows a side schematic view of an example element employed in a device according to the invention. Components which correspond to those in figures 1 and 2 are numbered identically.

The underlying operation of the element is similar to that of the prior art device, although the charge storing element 6, together with its surrounding insulation 5 and gate 7 is formed on a plate 9 which is movable with respect to the substrate 2. The plate 9 is held above the substrate 2 such that there is a gap 10 that will generally be of a width of 1 micron or less. In use the basic operating principle of the element shown in figure 3 is that the plate 9 can be moved so that adjacent charge storing elements 6 on the plate 9 can, in turn, have the charge value stored thereon determined by the field effect device formed on the substrate 2.

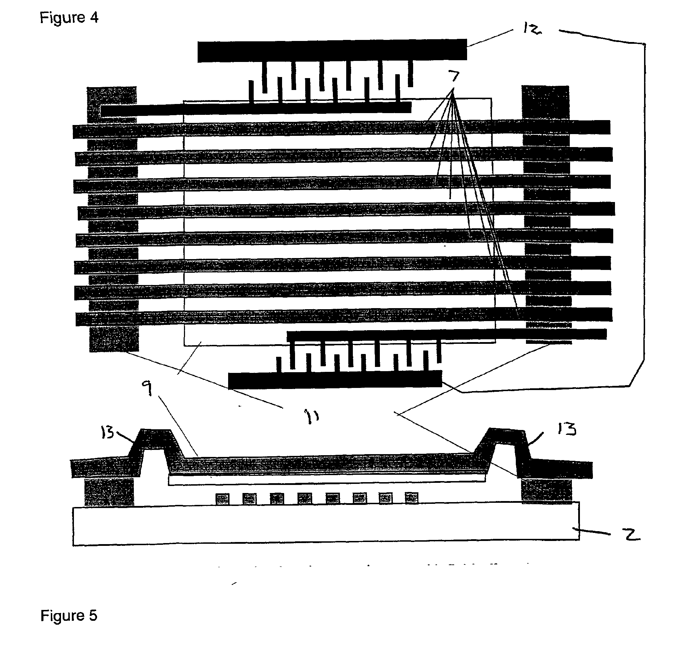

Figure 4 is a plan view of a small device combining an array of elements of the type shown in figure 3. Again, components which correspond to those described above are numbered identically. As can be seen from this figure, and from figure 5, the movable plate 9 has a plate driving construction 12 which is formed from one or more comb actuators attached to the plate 9 and formed from a metal or other conductor. It also has fixed conducting comb actuators 12 that may be attached to the substrate 2. These actuators 12 can, in use, have an electrostatic charge applied thereto so that they move with respect to one another and thereby move the plate 9 with respect to the substrate 2.

As can be seen from figure 5, flexible members 13 support the plate 9 and form metal contacts for the gate-forming plates 7.

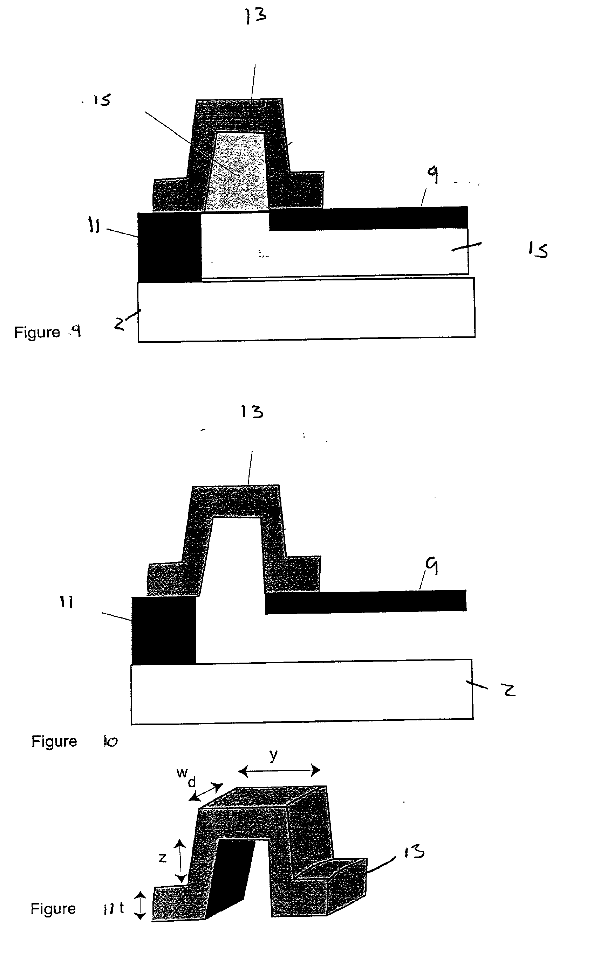

The flexible support members 13 are configured, by appropriate selection of the dimensions of width (w_{d}), length (y) and high (z) to provide an appropriate spring force to enable accurate positioning control of the moveable plate 9 and to prevent vibration effects, but are flexible enough to allow rapid movement of the plate as required. These dimensions are shown in figure 11. The flexible members are also configured to enable the plate 9 to move in a vertical direction with respect to the plane of the substrate 2. This is to enable the movable plate 9 to be drawn into contact with the face of the field effect device that is formed on the substrate 2 so that charge can be applied to charge storing elements 6 as and when required, and so that accurate determination of charge levels can be made.

In use, the control of the position of the plate 9 is provided by position detecting field effect devices (not shown) formed on the substrate 2. These can provide appropriate feedback to the comb actuators 12 to provide accurate positioning. When the device is in operation it may be desirable, in order to have seamless writing and reading of individual charge storage elements, to provide the device of the invention with a dynamic random access memory (DRAM) which can buffer data either for input or output so that compensation can be made for delays in movement of the plate to provide appropriate reading.

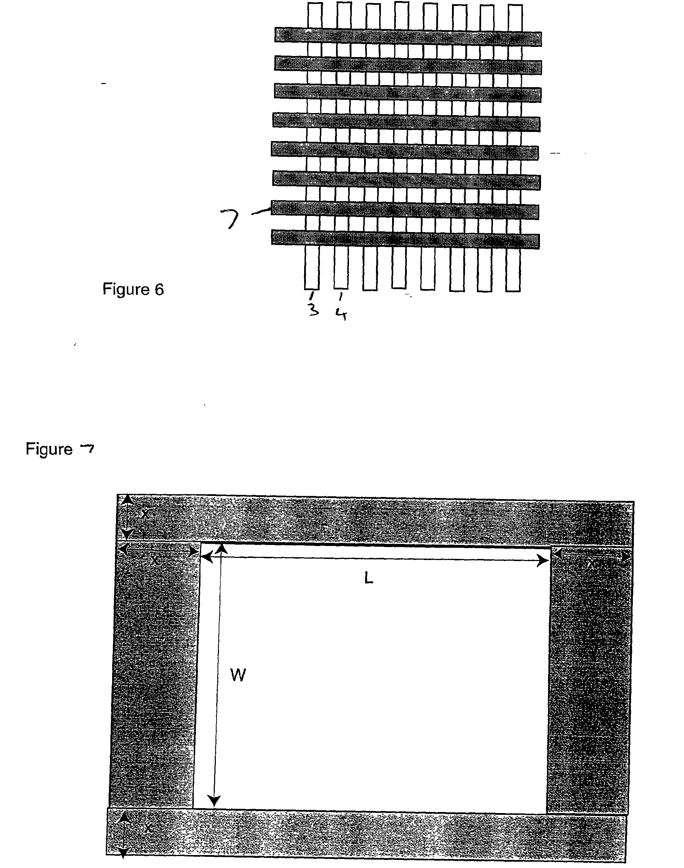

To ensure a good packing density the sub cells have to be large enough so that the area of the chip lost to the actuation regions is small in comparison to the area of the sub cell containing the moving platform with the charged insulator and gate lines. Figure 7 shows a schematic diagram of the sub cell (area LW) and areas lost to actuation machinery (grey areas 4x²+2Wx+2Lx). The sub cell has to be moved by at most F in either direction, F being the dimension of a read cell. To make sure that less than 10% of the chip is lost in this fashion we need (LW/(4x² +2Wx+20Lx))>10. If we need the actuation device to be 10 times the movement then x=10F so (LW/(400F²+20WF+21w))>10. If L=W then L²-400LF-4000F²>0 or for L much greater than F, L needs to be greater than 400F. For a read cell of side 0.4 microns this gives an area for the sub cell of (160µm)².

There can be around ten thousand field effect devices under each moving plate of around (100µm)². With a minimum feature size of 0.2µm the device can store over 25 bits of information above each field effect transistor. That is 250 thousand bits of information. In a 1cm square chip the device could therefore store 2.5 Giga bits of information.

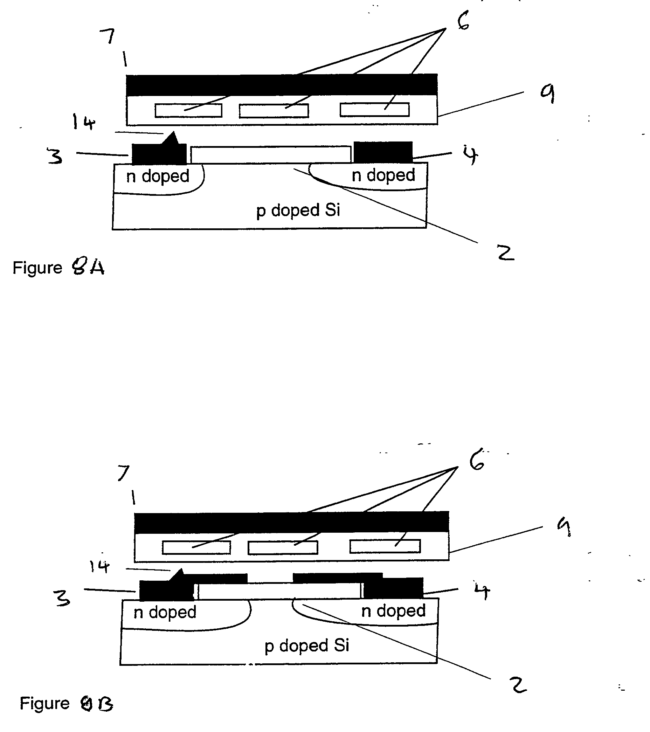

Figure 8A shows how a sharp feature 14 defined on the source side of the field effect device can be used to inject charge into a small region of the movable plate 9. The charge storing element 6 could be an Si₃N₄ layer placed between two SiO₂ layers. The charge would then remain localised in the region 6 of the plate 9 that is smaller than the minimum definable feature size. The charge elements 6 could be poly-silicon islands either within the SiO₂ layer or join the bottom side of it on the bottom of the movable plate 9 or could be on small metal islands defined on the bottom of the movable plate 9. These are also below an insulator 5 with the gate 7 on top. A large electric field defined between the gate 7 and the source 3 is used to inject or remove electrons (or add holes). A negative voltage is applied, in use to a gate 7 whilst a positive voltage is applied to a source 3 via a line. This provides an electric field that is large enough to lead to tunnelling of electrons in the selected cell. The field at all other cells remains below activating threshold. To improve the resolution of the field effect device so that it could read the charge state of very small areas, the active area of the device should be made very small. This can be achieved by diffusing the n type dopants under the oxide. In this way the channel length can be made shorter than the minimum feature size. Using the metal of the source 3 and drain 4 to screen all but a small area of the charged plate would also help improve the spatial resolution of the field effect device (figure 8B). Figure 8C shows a further example of the invention in which a cantilever 20 is provided in conjunction with the source 3, a cantilever 20 also having a sharp feature 14, is provided. This can improve programming by the generation of a voltage difference between the cantilever 20 and the gate 7 so that the cantilever is drawn toward the plate 9 to ensure speedy and accurate charging. Once the voltage difference is removed the cantilever 20 moves back towards the base 2.

In an further adaptation of the invention, an additional transistor (not shown) may be provided on the substrate 2 for each individual cell that is formed on the substrate 2. The additional transistor is employed to specifically address an individual cell to reduce stray voltages that may disturb charges in other areas of the device. Whilst this would increase individual cell area, reliability and yield are improved and the number of gate line 7 can be reduced by having a single gate over all the storage elements 6.

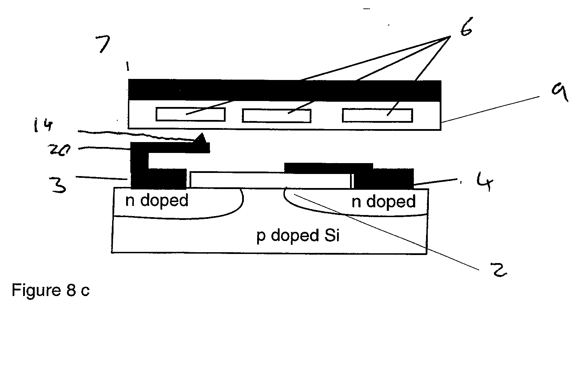

Figure 9 and 10 show how the gates 7 could be made into support members for the plate 9 using a sacrificial layer 15 put down before the gate layers 7. Sputter deposition of the gate metal 7 means that it conformally coats the sacrificial layer 15. This is then removed leaving an arch-like spring 13. The spring constant can be engineered so that the plate can be moved up and down perpendicular to the plane of the substrate, but have enough restoring force to overcome adhesion. The spring constant would also be such that the restoring force in the plane of the plate is not so large as to require large actuators to move them. Metal electrodes under the moving plate are used to pull the plate down onto bumps (not shown) near the field effect devices. The bumps reduce adhesion. With weak springs constants in the plane of the substrate 2, the position of the plate 9 can be controlled electrostatically using the actuators 12 and position detectors (not shown).

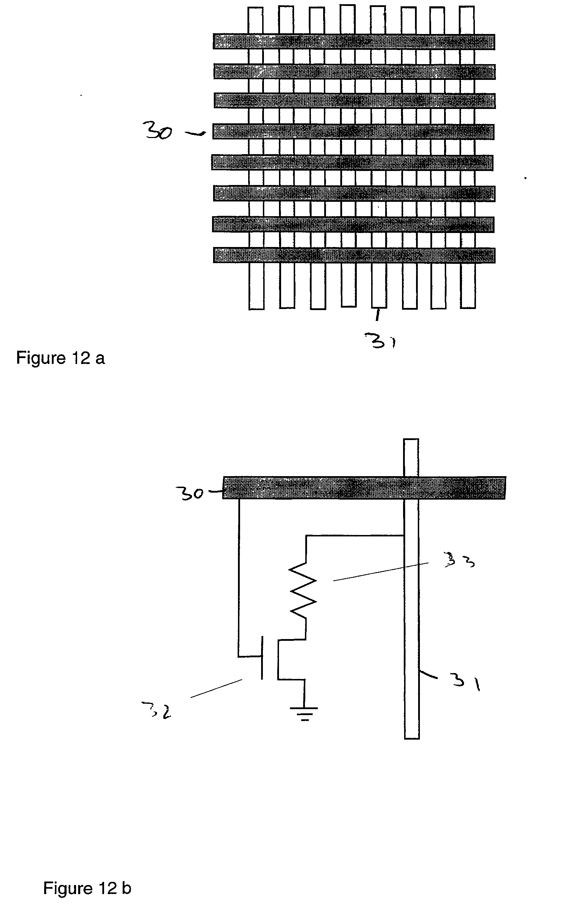

Figure 12A is a schematic plan view of a magnetic storage device that operates under the same principles as the device described above. In this example read lines 30 are placed above sensor lines 31. Figure 12B is a schematic diagram showing how individual elements can be magnetised by pulsing the current, via a transistor 32, 33, that passes through an individual sensor line 31 whilst a moving read line 30 is placed above it. For clarity the write line that would correspond to the gate 7 of the earlier example is not shown in figure 12B.

## Claims

1. A non-volatile memory device comprising:
a substrate supporting an array of field effect transistor devices;
a plate movable with respect to the substrate supporting an array of insulated charge storing elements each having gate-forming metal plates adjacent thereto; and
means for moving the plate with respect to the substrate such that, in use, the plate can be moved to position different charge storing elements over one of the array of field effect transistors so that each field effect transistor is able to determine the charge stored on more than one element.

2. A device according to claim 1, wherein the plate attached to the substrate by anchor points and the devices further comprises at least one flexible member associated with each anchor point.

3. A device according to claim 2, wherein the flexible members are formed from metal and act as conducting connecting regions for the gates on the plate.

4. A device according to any preceding claim, wherein the field effect transistors have sources which are shaped so as to enable them to be driven to charge individual charge storing elements.

5. A device according to claim 4, wherein the sources have a cantilever associated wherewith, the cantilever being driven, in use, towards the moveable plate in order to transfer charge to a selected storage element.

6. A device according to any preceding claim, wherein each of the fields affects transistor devices has a further transistor associated therewith for selective addressing thereof in use.

7. A non-volatile memory device comprising:
a substrate supporting an array of magnetic field detecting devices;
a plate movable with respect to the substrate supporting an array of elements formed from a magnetisable material, each having a magnetising device associated therewith; and
means for moving the plate with respect to the substrate such that, in use, the plate can be moved to position different magnetisable elements over one of the array of magnetic field detecting devices so that each magnetic field detecting device is able to determine the magnetisation of more than one magnetisable element.

8. A device according to claim 7, wherein the magnetic field detecting devices are Hall effect devices.

9. A device according to claim 7 or claim 8, wherein the plate may be attached to the substrate by anchor points and at least one flexible member associated with each anchor point.

10. A device according to claim 9, wherein the flexible members are formed from metal and act as conducting connecting regions for the magnetising devices on the plate.

11. A device according to any preceding claim, wherein the means for moving the plate comprises one or more ribbed conducting elements attached to the plate in combination with one or more ribbed elements fixed to the substrate, such that a charge applied to one of the elements shifts it with respect to the other.

12. A device according to any of the preceding claims manufactured by employing semiconductor manufacturing techniques.
